# EUROPEAN PATENT APPLICATION

(11) **EP 4 851 789 A1**
(43) Date of publication of application: **09.12.2026**
(21) Application number: 26179475.4
(22) Date of filing: 19.05.2026
(51) Int. Cl.: G06F 9/06

(54) **INFORMATION PROCESSING APPARATUS, PROGRAM, AND COMPUTER-IMPLEMENTED METHOD**

(30) Priority: 30.05.2025 JP 2025091348; 03.06.2025 JP 2025092706; 03.06.2025 JP 2025092707
(71) Applicant: Nintendo Co., Ltd., Kyoto-shi, Kyoto 601-8501 (JP)
(72) Inventor: SEKINE, Ayumu, Kyoto, 601-8501 (JP); MATSUMOTO, Tatsuya, Kyoto, 601-8501 (JP); KAKEMIZU, Hironori, Kyoto, 601-8501 (JP)
(74) Representative: Lorenz Seidler Gossel Part. mbB

(57) **Abstract**

A decode division is specified to issue a decode request for decode-target data, the decode request is stored such that the decode division is distinguishable, a start instruction for decoding is issued, the decode-target data is decoded for a group of decode requests at the time of the start instruction, each decoded data obtained by the decoding is stored such that the decode division is distinguishable, and the decoded data is acquired by specifying the decode division from the stored decoded data.

## Description

### BACKGROUND OF THE INVENTION

### Field of the Invention

The present disclosure relates to an information processing apparatus, a program, and a computer-implemented method.

### Description of the Background Art

Conventionally, systems that perform decoding exist. For example, Japanese Patent Laid-Open No. 2023-166047 (Patent Document 1) discloses a game system that performs audio playback. Normally, in a game program, various data (voice data in the example of Patent Document 1) are encoded and stored, and are decoded at the time of use.

There was room for improvement in the method of performing decoding.

### SUMMARY OF THE INVENTION

The information processing apparatus according to the present disclosure may adopt, for example, the following configurations (1) to (13).
(1) A first configuration example of the information processing apparatus according to the present disclosure includes means for specifying a decode division and issuing an instruction to decode decode-target data, means for, in response to the instruction, storing the decode-target data in an input buffer of a specific buffer, and generating a decode request including at least identification data of the specified decode division and identification data of the buffer in which the decode-target data is stored, and storing the decode request as a group of decode requests, means for issuing a start instruction for decoding, means for acquiring the group of decode requests at the time of the start instruction regardless of the identification data of the decode division, means for, for each of the acquired decode requests, acquiring decode-target data from an input buffer of a buffer indicated by the identification data of the buffer included in the decode request, and performing decoding of each of the acquired decode-target data respectively, means for, for each decoding, storing decoded data obtained by the decoding in an output buffer of a buffer indicated by the identification data of the buffer included in the decode request, means for, for each decoding, generating a decode response including at least the identification data of the decode division included in the decode request and the identification data of the buffer included in the decode request, and storing the decode response as a group of decode responses, means for determining that decoding for all of the acquired decode requests has been completed, means for issuing a completion notification of decoding when the completion is determined, means for waiting for completion of decoding after the start instruction, means for releasing the completion waiting when the completion notification has been issued, means for, after the completion waiting is released, specifying a decode division and issuing an instruction to acquire decoded data, and means for, in response to the instruction to acquire the decoded data, acquiring the decoded data from an output buffer of a buffer indicated by the identification data of the buffer included in the decode response, based on a decode response including the identification data of the specified decode division among the group of decode responses.

According to the configuration (1) above, the decode requests that have been made until the decoding start instruction can be collectively processed regardless of the decode division.

(2)
In each of the configurations (1) above, (11), (12), and (13) described later, means for including, in the decode request that was stored last before the start instruction among the decode requests, data identifying that the decode request was stored last may be further included. The determination of the completion of the decoding may be configured to determine that the decoding has been completed by referring to at least the data identifying that the decode request was stored last, when the decoding for the decode request that was stored last has ended.

According to the configuration (2) above, the accuracy of the determination of the completion of decoding can be improved.

(3)
In each of the configurations (1), (2) above, (11), (12), and (13) described later, the completion waiting may be configured to be executed by code separate from the start instruction. The issuance of the completion notification and the release of the completion waiting may be configured to be performed in a manner in which the release of the completion waiting is performed by the issuance of the completion notification, regardless of whether a start timing of the processing by the code for the completion waiting is before or after the issuance of the completion notification.

According to the configuration (3) above, after the decoding start instruction, other processing can be performed without waiting for the decoding result.

(4)
In each of the configurations (1) to (3) above, or (11), (12), (13) described later, the decode-target data may be data in a specific unit in encoded data composed of a series of data in the specific unit. The decode request may correspond to the data in the specific unit, and means for storing past decoding information for each decode division may be further included. The decoding may be configured to perform the decoding for each of the acquired decode requests using the past decoding information for the decode division indicated by the identification data of the decode division included in the decode request.

According to the configuration (4) above, decoding can be correctly performed for decode-target data that is encoded in a manner in which past decoding information is required at the time of decoding.

(5)
In the configuration (4) above, the instruction to decode the decode-target data may be configured to be accompanied by an instruction to initialize the past decoding information. The generation of the decode request may be configured to include instruction data for the initialization in the decode request based on the instruction for the initialization. Means for initializing the past decoding information for the decode division indicated by the identification data of the decode division included in the acquired decode request, before or after performing decoding of the decode-target data for the acquired decode request, based on the instruction data included in the acquired decode request, may be further included.

According to the configuration (5) above, loop processing of the same source data, change of playback position, change to different source data, etc. can be accommodated.

(6)
In the configuration (5) above, the initialization of the past decoding information may be configured to be performed before performing decoding of the decode-target data for the acquired decode request.

According to the configuration (6) above, change of playback position, etc. can be accommodated.

(7)
In each of the configurations (1) to (6) above, (11), (12), (13) described later, means for sorting the acquired decode requests for each decode division based on the identification data of the decode division included in the acquired decode requests may be further included. The decoding may be configured to be performed based on each of the decode requests after the sorting.

According to the configuration (7) above, when decoding decode-target data that is encoded in a manner in which past decoding information is required at the time of decoding, the efficiency of decoding is good.

(8)
In each of the configurations (1) to (7) above, (11), (12), (13) described later, means for searching for an empty buffer each time a decode request is issued may be further included. The buffer used for storing the decode-target data may be a buffer found by the search.

According to the configuration (8) above, resources can be efficiently utilized by dynamically allocating IO buffers.

(9)
In each of the configurations (1) to (8) above, (11), (12), (13) described later, the generation of the decode response may be configured to further include size data indicating the size of the decoded data in the decode response. The acquisition of the decoded data may be configured to acquire the decoded data based on the size data included in the decode response.

According to the configuration (9) above, the decoded data can be appropriately acquired.

(10)
In each of the configurations (1) to (9) above, or (11), (12), (13) described later, the decode-target data may be data in a specific unit in encoded data composed of a series of data in the specific unit. The instruction to decode the decode-target data may be performed for each of the data in the specific unit. The acquisition of the decoded data may be configured to acquire the decoded data for the specific unit.

According to the configuration (10) above, decoding can be collectively performed for a plurality of divisions, and the range of collective decoding for the same division can be determined.

(11)
A second configuration example of the information processing apparatus according to the present disclosure includes means for generating a decode request for decode-target data such that a decode division is distinguishable, and storing the decode request as a group of decode requests, means for issuing a start instruction for decoding, means for, based on the group of decode requests at the time of the start instruction, decoding each of the decode-target data respectively regardless of the decode division, means for storing each of the decoded data obtained by the decoding such that the decode division is distinguishable, and means for specifying a decode division and acquiring the decoded data.

(12)
A third configuration example of the information processing apparatus according to the present disclosure includes means for storing a group of decode requests including identification data of a decode division, means for acquiring the group of decode requests regardless of the identification data of the decode division, means for decoding decode-target data for each of the acquired decode requests respectively, means for storing each of the decoded data obtained by the decoding in association with the identification data of the decode division included in the decode request that was decoded, and means for acquiring, among the stored decoded data, decoded data associated with the identification data of a specified decode division.

(13)
A fourth configuration example of the information processing apparatus according to the present disclosure includes means for storing decode-target data in an input buffer of a specific buffer, and generating a decode request including at least identification data of a decode division and identification data of a buffer in which the decode-target data is stored, and storing the decode request as a group of decode requests, means for issuing a start instruction for decoding, means for acquiring the group of decode requests at the time of the start instruction regardless of the identification data of the decode division, means for, for each of the acquired decode requests, acquiring decode-target data from an input buffer of a buffer indicated by the identification data of the buffer included in the decode request, and performing decoding of each of the acquired decode-target data respectively, means for, for each decoding, storing decoded data obtained by the decoding in an output buffer of a buffer indicated by the identification data of the buffer included in the decode request, means for, for each decoding, generating a decode response including at least the identification data of the decode division included in the decode request and the identification data of the buffer included in the decode request, and storing the decode response as a group of decode responses, means for determining that decoding for all of the acquired decode requests has been completed, means for issuing a completion notification of decoding when the completion is determined, and means for, after the completion notification has been issued, acquiring decoded data from an output buffer of a buffer indicated by the identification data of the buffer included in the decode response, based on the group of decode responses.

As a configuration example of the program according to the present disclosure, the following programs in the information processing apparatus of each of (1) to (13) above can be listed.
- A program for executing processing by a system program described later in the information processing apparatus of each configuration example
- A program for executing processing by a game program described later in the information processing apparatus of each configuration example
- A program for executing processing by an SDK program described later in the information processing apparatus of each configuration example

As a configuration example of the computer-implemented method according to the present disclosure, respective methods executed by the information processing apparatus of each of (1) to (13) above, or a method executed by the program of each configuration example described above can be listed.

These and other objects, features, aspects, and effects of the present disclosure will become more apparent from the following detailed description in conjunction with the accompanying drawings.

### BRIEF DESCRIPTION OF THE DRAWINGS

FIG. 1 shows an exemplary illustrative non-limiting hardware block diagram of a game apparatus 1 according to an example embodiment.
FIG. 2 shows an exemplary illustrative non-limiting drawing of programs and data stored in a non-volatile memory 11 of the game apparatus 1.
FIG. 3 shows an exemplary illustrative non-limiting drawing of data included in audio data D1.
FIG. 4 shows an exemplary illustrative non-limiting drawing of data stored in a volatile memory 12 of the game apparatus 1 during program execution.
FIG. 5 shows an exemplary illustrative non-limiting sequence diagram of a first stage in the processing by each program.
FIG. 6 shows an exemplary illustrative non-limiting sequence diagram of a second stage in the processing by each program.
FIG. 7 shows an exemplary illustrative non-limiting sequence diagram of a third stage in the processing by each program.

### DESCRIPTION OF THE PREFERRED EMBODIMENTS

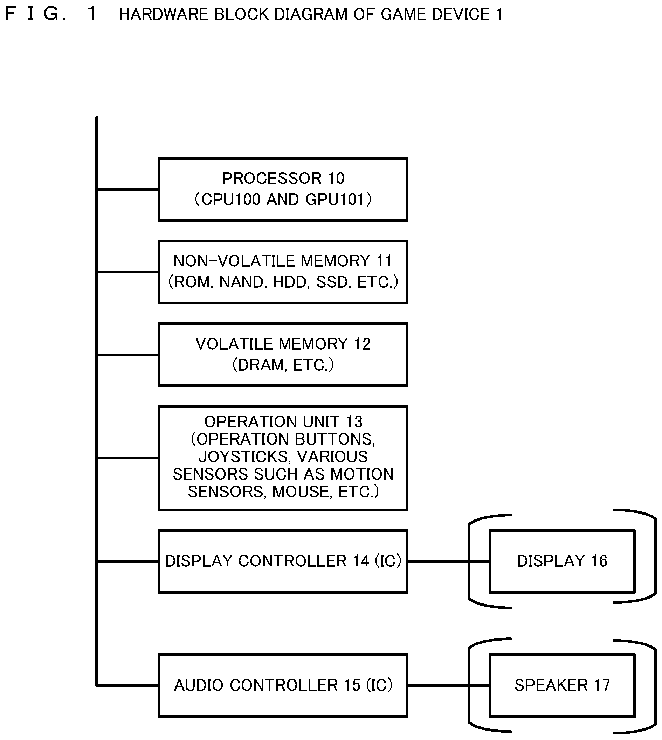

Hereinafter, an example embodiment will be described. FIG. 1 shows an example of a hardware configuration of a game apparatus 1 according to this example embodiment. The game apparatus 1 includes a processor 10, a non-volatile memory 11, a volatile memory 12, an operation unit 13, a display controller 14, an audio controller 15, etc. The processor 10 is an SoC (System-on-a-chip) including a CPU (Central Processing Unit) 100 and a GPU (Graphics Processing Unit) 101, etc. The CPU 100 and the GPU 101 may be provided separately. The non-volatile memory 11 may be anything that can store data non-volatilely, such as a ROM (Read Only Memory), a NAND (Not AND) type flash memory, an SSD (Solid State Drive), an HDD (Hard Disk Drive), a USB (Universal Serial Bus) memory, a NOR (Not OR) type flash memory, an MRAM (Magnetoresistive Random Access Memory), etc., and may be a built-in memory or may be a memory in a removable memory card. The volatile memory 12 may be, for example, a DRAM (Dynamic Random Access Memory), etc. The operation unit 13 may include operation buttons, joysticks, various sensors (motion sensors, etc.), a mouse, etc. The display controller 14 is a controller that outputs display data or signals to a display, and for example, a display controller IC can be used. The display 16 is a built-in display in a portable game apparatus, or an external monitor (such as a TV or PC monitor) in a stationary game apparatus, etc. The audio controller 15 is an IC that outputs audio data or signals to a speaker. The speaker 17 is, for example, a built-in speaker in a portable game apparatus, or an external speaker (such as a TV speaker) in a stationary game apparatus, etc.

The game apparatus 1 may include a DSP (Digital Signal Processor) for a decoder. Alternatively, the audio controller 15 may have a decoder function.

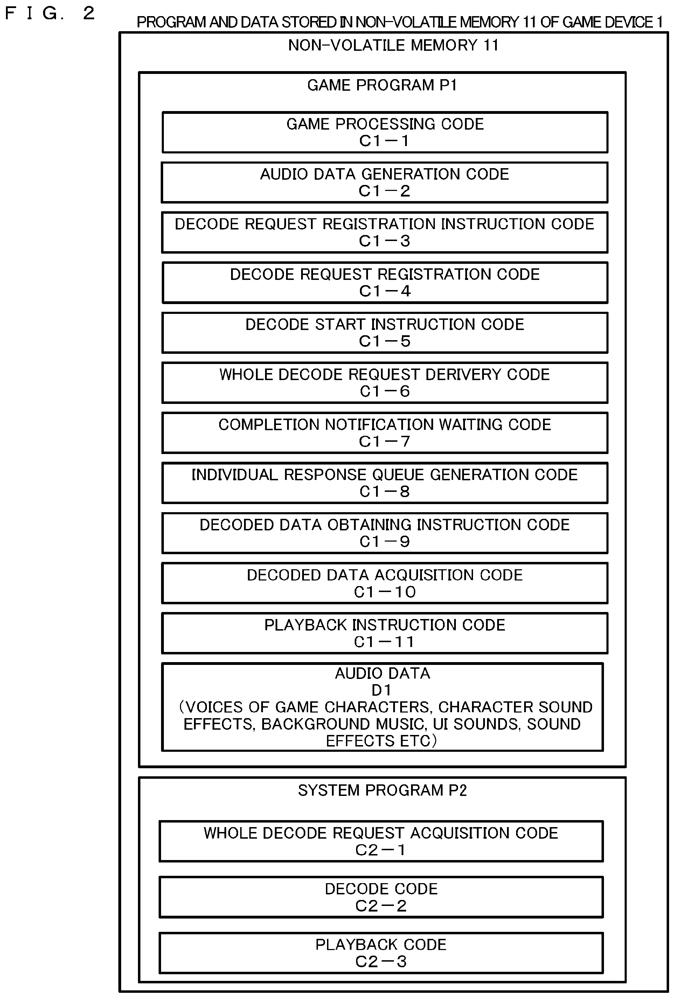

FIG. 2 shows an example of programs and data stored in the non-volatile memory 11 of the game apparatus 1. A game program P1 and a system program P2 are stored in the non-volatile memory 11. The game program P1 and the system program P2 are executed by the CPU 100.

The game program P1 includes a game processing code C1-1, an audio data generation code C1-2, a decode request registration instruction code C1-3, a decode request registration code C1-4, a decode start instruction code C1-5, a whole decode request delivery code C1-6, a completion notification waiting code C1-7, an individual response queue generation code C1-8, a decoded data acquisition instruction code C1-9, a decoded data acquisition code C1-10, a playback instruction code C1-11, audio data D1, etc.

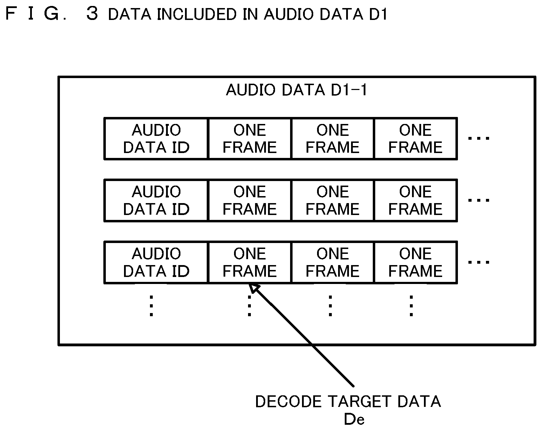

The game processing code C1-1 is a code that performs character movement and action control, collision determination, scenario progression, etc. based on operation data of the operation unit 13, etc. The audio data generation code C1-2 is a code that, when an audio event (a specific operation, a specific action of an object, a collision of an object, a production timing, etc.) occurs, designates the audio data D1 as data to be played back. The audio data D1 is audio data stored in advance corresponding to an audio event. The audio data D1 is data encoded with a specific codec, and as shown in FIG. 3, a plurality of audio data are included corresponding to audio events. Each audio data is divided into frames of a specific unit. The audio data of each frame is the decode-target data.

The decode request registration instruction code C1-3 is a code that issues an instruction to register data requesting decoding of a specific decode-target data (decode request data). By repeatedly executing this code before execution of decoding, decode request data for a plurality of decode-target data can be registered, or by specifying different decode divisions and issuing decode request registration instructions, decode request data for decode-target data of different audio data can be registered. A decode division is a division that assigns a different division to different audio data so that decoding results and/or decoding processing of a plurality of audio data are not mixed. For example, when decoding audio data 1 and audio data 2 in parallel, decode division 1 is assigned to the decode request of audio data 1, and decode division 2 is assigned to the decode request of audio data 2. Note that the decode request registration instruction code C1-3 includes an instruction for setting an initialization flag described later.

The decode request registration code C1-4 is a code that, in response to an instruction from the decode request registration instruction code C1-3, registers decode request data in a queue prepared for each decode division (hereinafter referred to as an individual request queue), and stores the decode-target data in an input buffer. The decode request data according to this example embodiment includes data identifying a decode division, data identifying an input buffer in which the decode-target data is stored, data identifying a decode request, a last identification flag, and an initialization flag. The data identifying a decode request is, for example, data that is incremented each time there is a decode request, and each decode request is identified thereby. The last identification flag is data identifying the decode request that was registered last among the decode requests registered up to the instruction to start decoding. The initialization flag is a flag for initializing past decoding information Dpast, described later, for each decode division. Note that in the present disclosure, a queue refers to one in which registration and utilization of data is performed in a FIFO (First-In First-Out) manner, and when data is taken out from the queue and utilized, the data that was registered earliest is taken out, and the taken-out data is deleted from the queue.

The decode start instruction code C1-5 is a code that instructs to start decoding. Note that specification of a decode division is not performed in this instruction.

The whole decode request delivery code C1-6 is a code that takes out all decode request data for all decode divisions registered up to the decode start instruction from the individual request queue of each decode division, and delivers the decode request data to the system program P2 (collectively or sequentially). In this case, in this example embodiment, all the decode request data for all decode divisions are sorted in the order indicated by the data identifying the decode request and delivered. Also, the last identification flag of the decode request data registered last (the data of the decode request registered last among the decode request data registered before the decode start instruction) is set to 1 (the other last identification flags are 0).

The completion notification waiting code C1-7 is a code that waits for a decoding completion notification.

The individual response queue generation code C1-8 is a code that, when a decoding completion notification arrives, takes out each decode response data registered in a queue (a whole response queue described later) in which all decode response data for all decode divisions generated by the decoding is registered, and moves the decode response data to a queue for each decode division (hereinafter referred to as an individual response queue). The decode response data is metadata of the decoding result and will be described later.

The decoded data acquisition instruction code C1-9 is a code that specifies a decode division and issues an instruction to acquire decoded data for one frame. By repeatedly executing this code, all decoded data for all decode requests registered so far for the specified decode division can be acquired.

The decoded data acquisition code C1-10 is a code that, in response to an instruction based on the decoded data acquisition instruction code C1-9, acquires one decode response data from the individual response queue of the specified decode division, and delivers the decoded data for one frame stored in the output buffer indicated by the information identifying the output buffer included in the decode response data.

The playback instruction code C1-11 is a code that issues an instruction for playback based on decoded data.

The system program P2 includes a whole decode request acquisition code C2-1, a decode code C2-2, a playback code C2-3, etc.

The whole decode request acquisition code C2-1 is a code that acquires all decode request data for all decode divisions delivered from the whole decode request delivery code C1-6. Then, each acquired decode request data is registered in a queue (a different queue from the individual request queue described above, referred to as a whole request queue) while maintaining the order in this example embodiment. That is, all decode request data for all decode divisions is registered in the whole request queue.

Thereafter, decoding by the decode code C2-2 is started. Note that the registration in the whole request queue is not mandatory, and the delivered decode request data may be utilized without being registered in a queue. Also, before acquiring all decode request data, decoding processing may be performed each time one or a specific unit of decode request data is acquired. The decoding processing may be performed by changing the order of the delivered decode request data.

The decode code C2-2 is a code that performs decoding of each decode-target data based on each acquired decode request data. Specifically, decode request data is taken out from the whole request queue one by one, decoding of the decode-target data specified by each decode request data is performed, and decode response data, which is metadata of the decoding result, is registered in a queue (a different queue from the individual request queue and the whole request queue described above, referred to as a whole response queue). In this example embodiment, the decode response data includes the identification data of the decode division included in the decoded decode-target data, the identification data of the input buffer included in the decoded decode request data (this serves as the identification data of the output buffer), the identification data of the decode request included in the decoded decode request data, and size data of the decoded data. When decoding for all the delivered decode request data has ended, a decoding completion notification is issued.

The decoding processing may be performed by a hardware decoder.

The playback code C2-3 is a code that, in response to an instruction from the playback instruction code C1-11, causes the audio controller 15 to perform audio playback based on the decoded data.

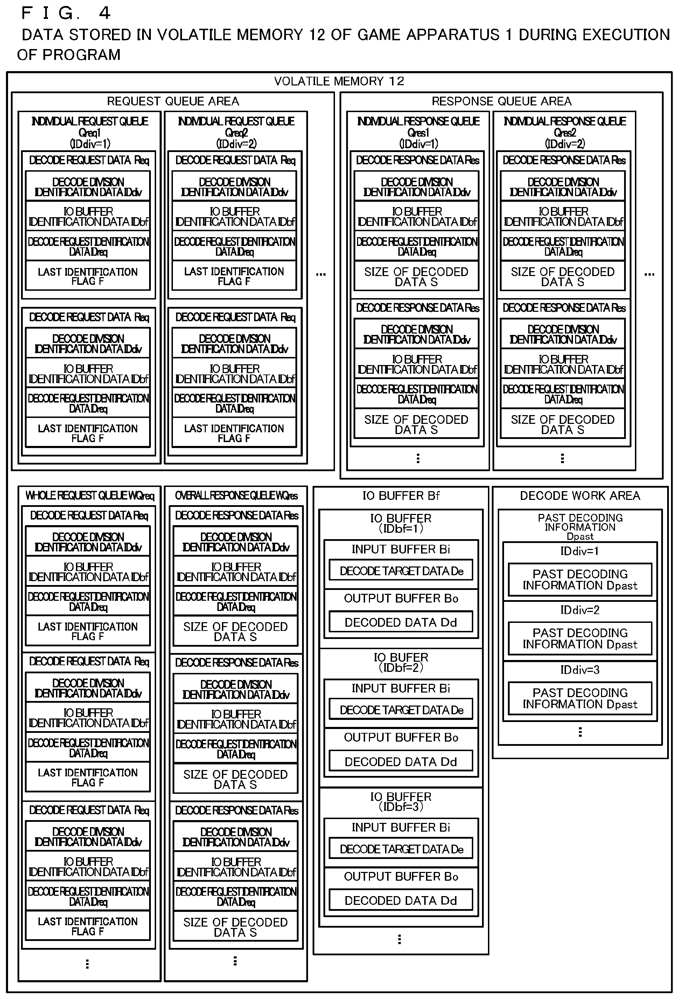

FIG. 4 shows an example of data stored in the volatile memory 12 when the above-described programs are executed. In the volatile memory 12, areas for the above-described individual request queue, whole request queue, individual response queue, and whole response queue are secured. In the areas for the individual request queue and the individual response queue, queue areas for each decode division are secured. In each area, decode request data or decode response data is stored. In the volatile memory 12, an IO buffer area is secured. The IO buffer area has a plurality of IO buffer areas, and each IO buffer area includes an input buffer for storing decode-target data and an output buffer for storing decoded data. The input buffer and the output buffer are managed with the same identification data. Note that each decode request data includes the above-described initialization flag, but this is not shown in FIG. 4 due to space limitations.

In the volatile memory 12, a decoding work area is also secured. In the decoding work area, past decoding information, etc. for each decode division is stored. The past decoding information is stored because the audio data D used in this example embodiment is encoded in a manner in which past decoding information (feature values, etc.) is required for decoding of a specific frame. Specifically, the audio data D1 may be encoded by the Opus codec.

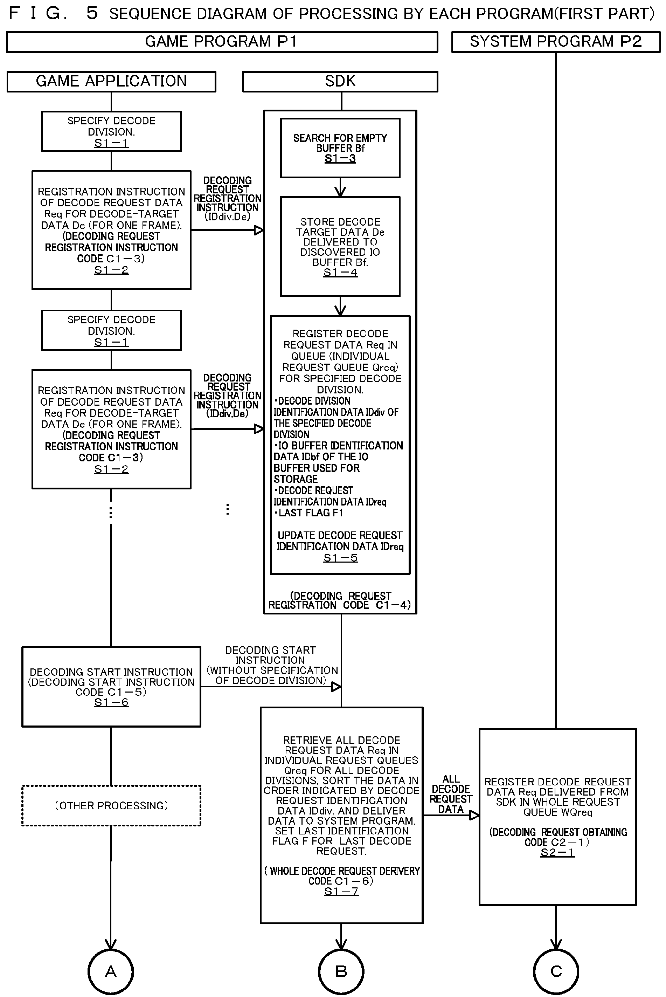

In FIG. 4, for reference in the description of the processing sequence using FIG. 5, the following symbols are assigned: decode request data (Req), decode division identification data (IDdiv), IO buffer identification data (IDbf), decode request identification data (IDreq), last identification flag (F), decode response data (Res), size of decoded data (S), individual request queue (Qreq), individual response queue (Qres), whole request queue (WQreq), whole response queue (WQres), IO buffer (Bf), input buffer (Bi), output buffer (Bo), decode-target data (De), decoded data (Dd), past decoding information (Dpast).

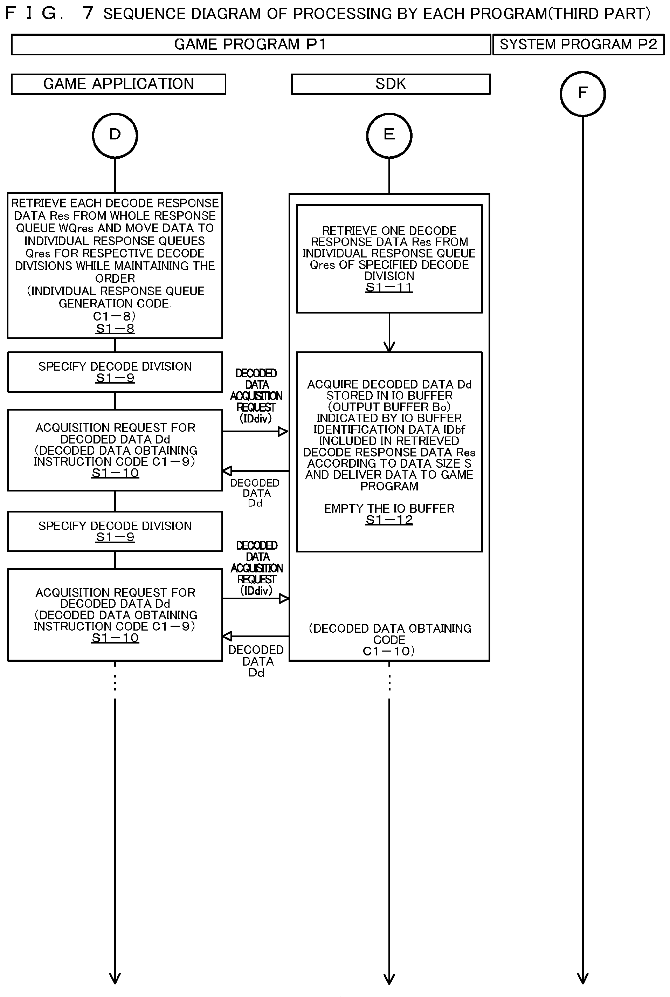

FIGS. 5 to 7 show a sequence showing an example of processing by the above-described programs. This sequence is repeatedly executed when audio data D1 to be played back is generated, in order to decode the decode-target data of each frame included in the audio data D1.

In FIGS. 5 to 7, the left side shows the processing by executing the code of a game application included in the game program P1, the center shows the processing by executing the code of an SDK (Software Development Kit: a software kit provided to game application developers) included in the game program P1, and the right side shows the processing by executing the code of the system program P2. A developer of a game application can use the SDK portion of the code without creating the SDK portion of the code. Note that the distinction between the processing by the code of the game application and the processing by the code of the SDK is one example. For example, a part or all of the code of the SDK may be implemented in the game application. In this case, since the exchange between the code of the game application and the code of the SDK becomes unnecessary, some of the codes shown in FIGS. 5 to 7 become unnecessary (for example, when the registration of decode requests is performed on the game application side, the decode request registration code C1-4 is sufficient, and the decode request registration instruction code C1-3 becomes unnecessary. The same applies to other instruction codes, etc.). Also, a part or all of the code of the game program P1 may be implemented in the system program P2, and a part or all of the system program P2 may be implemented in the game program P1.

When an audio event occurs, a generation process of the audio data D1 to be played back is performed. Specifically, the audio data D1 to be played back may be stored in a playback target area (not shown) of the volatile memory 12. When the audio data D1 to be played back is generated, based on the code of the game application, specification of a decode division is performed (S1-1).

Next, based on the code of the game application, an instruction to register decode request data Req for decode-target data De (for one frame) is performed (S1-2). Note that, although not shown, the instruction to register decode request data Req at S1-2 includes an instruction to set the above-described initialization flag (hereinafter assigned the symbol F2). This initialization flag F2 is instructed to be set to ON when (i) a decode request for new audio data D1 is made, (ii) a decode request for the first decode-target data De is made again when performing loop playback of the same audio data D1, or (iii) a playback position is changed during playback of the same audio data D1, etc., and in other cases, the initialization flag F2 is instructed to be set to OFF. Note that the initialization flag F2 may be instructed to be set to ON when a decode request for the last decode-target data De of the audio data D1 is made.

In response to the instruction at S1-2, based on the code of the SDK, a search for an empty buffer Bf is performed (S1-3). Next, the decode-target data De is stored in the input buffer Bi of the found IO buffer Bf (S1-4). Next, the decode request data Req including the identification data IDdiv of the specified decode division, the identification data IDbf of the IO buffer Bf used for storage, the identification data IDreq of the decode request, and the last identification flag F is registered in the individual request queue Qreq of the specified decode division. At this point, the last identification flag F is set to "0". Then, the identification data IDreq of the decode request is updated (S1-5). Note that, although not shown, at S1-5, a process of setting the initialization flag F2 in accordance with the instruction at S1-2 and including the initialization flag F2 in the decode request data Req is performed.

Next, based on the code of the game application, a decode start instruction is performed (S1-6). Note that, before the decode start instruction, the processes of S1-1 and S1-2 may be performed a plurality of times, and accordingly, the processes of S1-3 to S1-5 may be performed a plurality of times. How many frames of decode-target data to register decode requests for before the decode start instruction, and/or which decode division of decode-target data to register decode requests for, are arbitrary and may be determined for each game application. For one audio data D1, decode request registration of the same decode division may be performed a plurality of times, or for decoding a plurality of audio data D1 in parallel, decode request registration of different decode divisions may be performed, or both of the above may be performed. The specification of the decode division (S1-1) does not need to be performed each time, and in that case, decode requests may be performed with the already-specified decode division.

When a plurality of decode request registrations have been performed for one audio data D1 before the decode start instruction, that is, when the same decode division is repeatedly specified in the specification of the decode division at S1-1, decode request data Req for decode-target data De of a plurality of frames is registered in the individual request queue Qreq of the specified decode division. Also, when decode request registrations have been performed for a plurality of audio data D1, that is, when different decode divisions are specified in the specification of the decode division at S1-1, decode request data is registered in the individual request queues Qreq of a plurality of decode divisions. Note that the decode start instruction is not accompanied by specification of a decode division. That is, the decode start instruction instructs the start of decoding for all decode requests of all decode divisions registered before the decode start instruction.

After the decode start instruction, based on the code of the game application, a decoding completion notification waiting process is performed at an arbitrary timing (S1-7). Note that, before this waiting process, arbitrary game processing, etc. may be performed. In this example embodiment, the decode start instruction and the decode completion waiting process are instructions. Therefore, it is not mandatory to immediately wait for the decoding completion after the decode start instruction, and other processing can be performed.

When the decode start instruction is made, based on the code of the SDK, a process of taking out all decode request data Req in the individual request queues Qreq of all decode divisions and passing the decode request data Req to the system program P2 is performed (S1-8). In this case, all decode request data Req of all decode divisions are sorted by the decode request identification data IDreq and delivered to the system program P2 so that the registration order of the decode requests can be known. In this case, when the decode request identification data IDreq indicates that the data was registered last before the decode start instruction, the last identification flag F of the decode request data is set to "1". Note that the taken-out decode request data Req may be collected into one group (for example, in a list format in the registration order of decode requests) and passed to the system program P2, or may be passed one by one or in portions. Sorting by the decode request identification data IDreq before delivery is not mandatory. For example, the decode request data may be sorted for each decode division and passed to the system program P2, or may be passed to the system program P2 without performing any sorting.

When such delivery of the decode request data Req is performed, based on the code of the system program P2, a process of registering the delivered decode request data Req in the whole request queue WQreq while maintaining the order in this example embodiment is performed (S2-1). That is, all decode request data Req in the individual request queues Qreq of all decode divisions are registered in the whole request queue WQreq in the order of the decode requests. Note that it is not mandatory to perform decoding processing for each decode request in the order of the requests, and for example, the decode requests may be divided or sorted for each decode division, and decoding may be sequentially performed for each decode division. Even in this case, when viewed limited to a specific decode division, the decode request data Req is registered in the whole request queue WQreq in the order of the decode requests. When encoding is performed in a manner in which past decoding information (feature values, etc.) is required for decoding of a specific frame, the order of the decode requests within each decode division needs to be maintained.

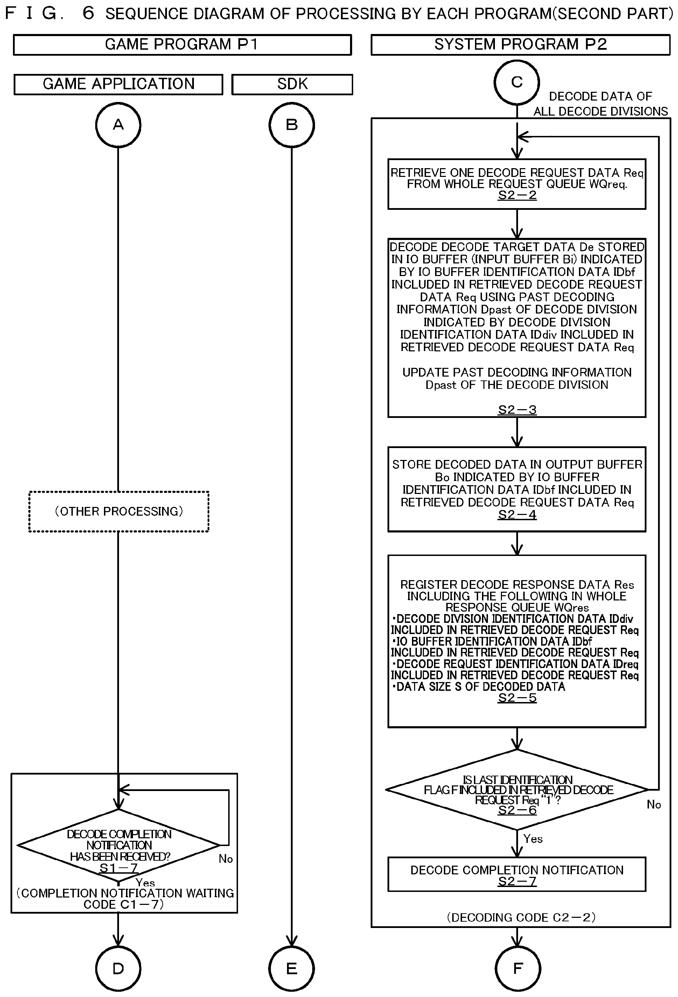

Thereafter, based on the code of the system program P2, decoding processing is performed. In the decoding processing, first, a process of taking out one decode request data Req from the whole request queue WQreq is performed (S2-2). Although omitted in FIG. 6, after S2-2 and before S2-3, the following process is performed.
- A process of initializing the past decoding information Dpast of the decode division indicated by the decode division identification data IDdiv included in the taken-out decode request data Req, when the initialization flag F2 included in the taken-out decode request data Req is ON

Note that when the initialization flag F2 is instructed to be set to ON when a decode request for the last decode-target data De of the audio data D1 is made, after performing the decoding processing, a process of initializing the past decoding information Dpast of the decode division indicated by the decode division identification data IDdiv included in the taken-out decode request data Req is performed. However, in this case, it is difficult to accommodate a sudden change in the playback position.

Next, a decoding process of the decode-target data De stored in the input buffer Bi indicated by the IO buffer identification data IDbf included in the taken-out decode request data Req is performed. In this process, the past decoding information Dpast of the decode division indicated by the decode division identification data IDdiv included in the taken-out decode request data Req is used. Also, a process of updating the past decoding information Dpast of the decode division is performed (S2-3).

Next, the decoded data Dd obtained by the decoding is stored in the output buffer Bo indicated by the IO buffer identification data IDbf included in the taken-out decode request data Req (S2-4).

Next, a process of registering decode response data Res including the following in the whole response queue WQres is performed (S2-5).
- The identification data IDdiv of the decode division included in the taken-out decode request data Req
- The identification data IDbf of the IO buffer included in the taken-out decode request data Req
- The decode request identification data IDreq included in the taken-out decode request data Req
- The data size S of the decoded data

The processes of S2-2 to S2-5 are executed until the processing is completed for all the delivered decode request data (S2-6). As a result, decoding of all the decode-target data is executed regardless of the decode division. In the whole response queue WQres, all decode response data Res regardless of the decode division is registered. In this example embodiment, the decode response data Res is registered in the whole response queue WQres in the order in which decoding was performed (in the order in which decoding results were obtained). When decoding is performed in the order of decode requests, the decode response data Res is registered in the whole response queue WQres in the order of decode requests. Note that when a plurality of decodings are performed in parallel as described later, there is a possibility that the order of starting decoding and the order of obtaining decoding results do not match, but if the decode requests of the same decode division are assigned to the same decoding processing system, the order of obtaining decoding results is maintained, and when viewed limited to a specific decode division, the decode response data Res is registered in the whole response queue WQres in the order of decode requests. Even when processing such as sorting decode requests for each decode division before decoding is performed, similarly, when viewed limited to a specific decode division, the decode response data Res is registered in the order of decode requests. Note that the decode response data Res does not need to be registered in the whole response queue WQres in the order of decode requests. However, in this example embodiment, as described later, since the decode response data Res is taken out from the individual response queue Qres in a FIFO manner, it is preferable that the decode response data Res is registered in the order of decode requests for each decode division.

When the processing is completed for all the delivered decode request data, a decoding completion notification is issued (S2-7). As a method for determining that the processing is completed for all the delivered decode request data, it may be determined that there is no data in the whole request queue WQreq, but in this example embodiment, it is determined by referring to whether the last identification flag F included in the taken-out and processed decode request data Req is 1 or not, and when the last identification flag F is "1," it is determined that the processing is completed for all the delivered decode request data. In this example embodiment, after the decode start instruction, new decode request instructions and registrations are possible. Therefore, the whole request queue WQreq may include decode request data registered after the decode start instruction. In that case, by referring to the last identification flag F, it can be determined that the processing for the data that was registered at the time of the decode start instruction has been completed.

Note that, as an option, a configuration in which a plurality of decodings are performed in parallel by having a plurality of decoding cores, etc. may be adopted, but in this case, when the last identification flag F included in the taken-out and processed decode request data Req is "1," it may be confirmed, based on the decode request identification data IDreq included in the taken-out and processed decode request data Req, that all decode request data Req registered before the taken-out and processed decode request data Req have been decoded (for example, by determining that metadata of decoding results has been registered in the whole response queue WQres), and thereby, it may be determined that the processing for all decode request data registered before the decode start instruction has been completed. This accommodates changes in the order of obtaining decoding results among the parallel decoding processes. Note that when a configuration in which a plurality of decodings are performed in parallel is adopted, in the decoding processing, decode request data specifying the same decode division may be assigned to the same decoding processing system.

The decoding completion notification may be, for example, a method of notifying a kernel to that effect, or a method such as setting a completion flag in a memory shared with the game application, etc. Also, the release of the waiting in the decoding completion waiting process may be, correspondingly, a method of being released by an instruction from the kernel, or a method of being released by referring to the completion flag, etc. As a result, the decoding completion waiting process can be released regardless of whether the start timing of the decoding completion waiting process (S1-7) is before or after the decoding completion notification process (S2-7).

When the decoding completion notification is issued, in the above-described decoding completion notification waiting process (S1-7), the waiting process is released.

Next, based on the code of the game application, a process of taking out all decode response data Res from the whole response queue WQres and moving the decode response data Res to the individual response queue Qres for each decode division while maintaining the order in this example embodiment is performed (S1-8). That is, a process of dividing the decode response data registered in the whole response queue WQres into the individual response queues Qres for each decode division is performed.

Next, based on the code of the game application, a process of specifying a decode division is performed (S1-9). This is to specify the decode division of the decoded data to be acquired.

Next, based on the code of the game application, an acquisition request for decoded data Dd is performed (S1-10).

In response to the acquisition request, based on the code of the SDK, a process of taking out one decode response data Res from the individual response queue Qres of the specified decode division is performed (S1-11). Then, a process of acquiring the decoded data Dd stored in the output buffer Bo indicated by the identification data IDbf of the IO buffer included in the taken-out decode response data Res according to the data size S, delivering the decoded data Dd to the game application side, and emptying the IO buffer is performed (S1-12).

Then, the code of the game application (the decoded data acquisition instruction code C1-9) acquires the decoded data Dd passed from the SDK.

By repeating the codes of S1-9 and S1-10 in the code of the game application, it is possible to acquire all the decoded data Dd of all the decode-target data De for which decode requests have been registered, divided by decode division. Note that, as with decode requests, when acquiring decoded data, the specification of the decode division does not need to be performed each time, and in that case, acquisition of decoded data with the already-specified decode division may be performed.

By repeating the sequence shown in FIGS. 5 to 7, the game application can obtain decoded data for all frames included in the audio data D1.

The above is the description of this example embodiment.

Each decode response data Res may be taken out directly from the whole response queue WQres. All or a plurality of decode response data Res in the whole response queue WQres or the individual response queue Qres may be taken out at once, and all or a plurality of decoded data Dd, or all or a plurality of decoded data Dd of a specific decode division may be acquired at once.

The input buffer and the output buffer may be provided separately and managed with separate identification data. In this case, for example, the decoded data Dd may be stored in an empty output buffer, and the identification data IDbf of the buffer in the decode response data Res may be set to the identification data of the output buffer in which the decoded data Dd is stored.

The process of acquiring decoded data Dd may be automatically performed when there is a release of the waiting in the decoding completion waiting process. The decoding completion waiting process may be automatically performed after the decode start instruction process.

The descriptions of the respective elements such as the "game apparatus," "processor," "non-volatile memory," "volatile memory," "audio controller," each program, each code, each data ("decode request data," "decode response data," each identification data, etc.), etc. in the description of the above embodiment are descriptions of the respective elements as an example embodiment, even in cases where there is no specific statement to that effect.

In the above embodiment, queues were used for storing decode request data and decode response data, but it is possible to store each data without using queues and to take out and utilize necessary data from necessary locations as appropriate. It is not necessary to continuously maintain the order of decode requests in every scene in the sequence. When it is desired to maintain the order of decode requests, the decode request identification data IDreq may be used.

The game apparatus 1 may be a stationary game apparatus, may be a portable game apparatus, or may be a hybrid (integrated) game apparatus of the stationary type and the portable type. Instead of the game apparatus, the game apparatus may be an information processing apparatus such as a smartphone, a tablet terminal, a personal computer, a server apparatus in a network system, etc. Instead of the information processing apparatus, the above-described processes may be distributed and processed in an information processing system in which a plurality of apparatuses are connected by a local or long-distance network.

The above-described processor may be a general-purpose processor or may be a dedicated processor. The above-described IC may be a hardware logic circuit.

The above-described program may be stored in advance in the non-volatile memory, or may be downloaded from a server. The above-described program may be a group of program modules. Each program may be stored in a different memory. Each program includes program code in a format executable by the processor, and each program code includes instructions for the above-described processing.

The system program includes an OS (Operating System), firmware, an application program provided by the system, an applet program, etc. The system program may be an emulator program.

The above-described programs and/or codes may be processed in a shared manner by a plurality of processors. The execution order of the above-described codes may be appropriately changed. The execution order of the processes within the above-described codes may be appropriately changed. The above-described codes may be included in programs other than the above-described programs. For example, a code described as being included in the game program may be included in the system program. A code described as being included in the system program may be included in the game program. A code described as being included in the system program may be included in the OS, or may be included in firmware, etc.

In the above-described embodiment, the description was given using the example of a game program, but the above-described embodiment is not limited to game programs and can be applied to any application program. Also, in the above-described embodiment, the description was given using the example of audio data, but the above-described embodiment is not limited to audio data and can be applied to decoding of any encoded source data, for example, encoded image data.

The processing related to the above-described decode division is not mandatory, and the processing and data related to the decode division may be removed from the above-described embodiment.

Also, the present disclosure may adopt, for example, the following configurations.
1. An information processing apparatus comprising:
   means for specifying a decode division and issuing an instruction to decode decode-target data;
   means for, in response to the instruction, storing the decode-target data in an input buffer of a specific buffer, and generating a decode request including at least identification data of the specified decode division and identification data of the buffer in which the decode-target data is stored, and storing the decode request as a group of decode requests;
   means for issuing a start instruction for decoding;
   means for acquiring the group of decode requests at the time of the start instruction regardless of the identification data of the decode division;
   means for, for each of the acquired decode requests, acquiring decode-target data from an input buffer of a buffer indicated by the identification data of the buffer included in the decode request, and performing decoding of each of the acquired decode-target data respectively;
   means for, for each decoding, storing decoded data obtained by the decoding in an output buffer of a buffer indicated by the identification data of the buffer included in the decode request;
   means for, for each decoding, generating a decode response including at least the identification data of the decode division included in the decode request and the identification data of the buffer included in the decode request, and storing the decode response as a group of decode responses;
   means for determining that decoding for all of the acquired decode requests has been completed;
   means for issuing a completion notification of decoding when the completion is determined;
   means for waiting for completion of decoding after the start instruction;
   means for releasing the completion waiting when the completion notification has been issued;
   means for, after the completion waiting is released, specifying a decode division and issuing an instruction to acquire decoded data; and
   means for, in response to the instruction to acquire the decoded data, acquiring the decoded data from an output buffer of a buffer indicated by the identification data of the buffer included in the decode response, based on a decode response including the identification data of the specified decode division among the group of decode responses,
   wherein the decode-target data is data in a specific unit in encoded data composed of a series of data in the specific unit,
   the decode request corresponds to the data in the specific unit,
   the information processing apparatus further comprises means for storing past decoding information for each decode division,
   the decoding is configured to perform the decoding for each of the acquired decode requests using the past decoding information for the decode division indicated by the identification data of the decode division included in the decode request,
   the instruction to decode the decode-target data is configured to be accompanied by an instruction to initialize the past decoding information,
   the generation of the decode request is configured to include instruction data for the initialization in the decode request based on the instruction for the initialization,
   the information processing apparatus further comprises means for initializing the past decoding information for the decode division indicated by the identification data of the decode division included in the acquired decode request, before or after performing decoding of the decode-target data for the acquired decode request, based on the instruction data included in the acquired decode request, and
   the initialization of the past decoding information is configured to be performed before performing decoding of the decode-target data for the acquired decode request.
2. An information processing apparatus comprising:
   means for specifying a decode division and issuing an instruction to decode decode-target data;
   means for, in response to the instruction, storing the decode-target data in an input buffer of a specific buffer, and generating a decode request including at least identification data of the specified decode division and identification data of the buffer in which the decode-target data is stored, and storing the decode request as a group of decode requests;
   means for issuing a start instruction for decoding;
   means for acquiring the group of decode requests at the time of the start instruction regardless of the identification data of the decode division;
   means for, for each of the acquired decode requests, acquiring decode-target data from an input buffer of a buffer indicated by the identification data of the buffer included in the decode request, and performing decoding of each of the acquired decode-target data respectively;
   means for, for each decoding, storing decoded data obtained by the decoding in an output buffer of a buffer indicated by the identification data of the buffer included in the decode request;
   means for, for each decoding, generating a decode response including at least the identification data of the decode division included in the decode request and the identification data of the buffer included in the decode request, and storing the decode response as a group of decode responses;
   means for determining that decoding for all of the acquired decode requests has been completed;
   means for issuing a completion notification of decoding when the completion is determined;
   means for waiting for completion of decoding after the start instruction;
   means for releasing the completion waiting when the completion notification has been issued;
   means for, after the completion waiting is released, specifying a decode division and issuing an instruction to acquire decoded data;
   means for, in response to the instruction to acquire the decoded data, acquiring the decoded data from an output buffer of a buffer indicated by the identification data of the buffer included in the decode response, based on a decode response including the identification data of the specified decode division among the group of decode responses; and
   means for sorting the acquired decode requests for each decode division based on the identification data of the decode division included in the acquired decode requests,
   wherein the decoding is configured to be performed based on each of the decode requests after the sorting.
3. An information processing apparatus comprising:
   means for specifying a decode division and issuing an instruction to decode decode-target data;
   means for, in response to the instruction, storing the decode-target data in an input buffer of a specific buffer, and generating a decode request including at least identification data of the specified decode division and identification data of the buffer in which the decode-target data is stored, and storing the decode request as a group of decode requests;
   means for issuing a start instruction for decoding;
   means for acquiring the group of decode requests at the time of the start instruction regardless of the identification data of the decode division;
   means for, for each of the acquired decode requests, acquiring decode-target data from an input buffer of a buffer indicated by the identification data of the buffer included in the decode request, and performing decoding of each of the acquired decode-target data respectively;
   means for, for each decoding, storing decoded data obtained by the decoding in an output buffer of a buffer indicated by the identification data of the buffer included in the decode request;
   means for, for each decoding, generating a decode response including at least the identification data of the decode division included in the decode request and the identification data of the buffer included in the decode request, and storing the decode response as a group of decode responses;
   means for determining that decoding for all of the acquired decode requests has been completed;
   means for issuing a completion notification of decoding when the completion is determined;
   means for performing completion waiting of decoding after the start instruction;
   means for releasing the completion waiting when the completion notification has been issued;
   means for, after the completion waiting is released, specifying a decode division and issuing an instruction to acquire decoded data;
   means for, in response to the instruction to acquire the decoded data, acquiring the decoded data from an output buffer of a buffer indicated by the identification data of the buffer included in the decode response, based on a decode response including the identification data of the specified decode division among the group of decode responses;
   means for sorting the acquired decode requests for each decode division based on the identification data of the decode division included in the acquired decode requests; and
   means for searching for an empty buffer each time the decode request is issued,
   wherein the buffer used for storing the decode-target data is a buffer found by the search.
4. An information processing apparatus comprising:
   means for generating a decode request for decode-target data such that a decode division is distinguishable, and storing the decode request as a group of decode requests;
   means for issuing a start instruction for decoding;
   means for, based on the group of decode requests at the time of the start instruction, decoding each of the decode-target data respectively regardless of the decode division;
   means for storing each of the decoded data obtained by the decoding such that the decode division is distinguishable; and
   means for specifying the decode division and acquiring the decoded data.
5. A computer program for causing one or more processors to function as:
   means for acquiring, at a time of a start of decoding, a group of decode requests in which a decode division is distinguishable, regardless of the decode division;
   means for decoding decode-target data based on each of the acquired decode requests; and
   means for storing decoded data obtained by the decoding such that the decode division is distinguishable.
6. An information processing apparatus comprising:
   means for storing a group of decode requests including identification data of a decode division;
   means for acquiring the group of decode requests regardless of the identification data of the decode division;
   means for decoding decode-target data for each of the acquired decode requests respectively;
   means for storing each of the decoded data obtained by each decoding in association with the identification data of the decode division included in the decode request pertaining to the decoding; and
   means for acquiring, among the stored decoded data, decoded data associated with the identification data of a specified decode division.
7. A computer program for causing one or more processors to function as:
   means for acquiring a group of decode requests including identification data of a decode division regardless of the identification data of the decode division;
   means for decoding decode-target data for each of the acquired decode requests; and
   means for storing each of the decoded data obtained by the decoding in association with the identification data of the decode division included in the decoded decode request.
8. An information processing apparatus comprising:
   means for storing decode-target data in an input buffer of a specific buffer, and generating a decode request including at least identification data of a decode division and identification data of a buffer in which the decode-target data is stored, and storing the decode request as a group of decode requests;
   means for issuing a start instruction for decoding;
   means for acquiring the group of decode requests at the time of the start instruction regardless of the identification data of the decode division;
   means for, for each of the acquired decode requests, acquiring decode-target data from an input buffer of a buffer indicated by the identification data of the buffer included in the decode request, and performing decoding of each of the acquired decode-target data respectively;
   means for, for each decoding, storing decoded data obtained by the decoding in an output buffer of a buffer indicated by the identification data of the buffer included in the decode request;
   means for, for each decoding, generating a decode response including at least the identification data of the decode division included in the decode request and the identification data of the buffer included in the decode request, and storing the decode response as a group of decode responses;
   means for determining that decoding for all of the acquired decode requests has been completed;
   means for issuing a completion notification of decoding when the completion is determined; and
   means for, after the completion notification has been issued, acquiring decoded data from an output buffer of a buffer indicated by the identification data of the buffer included in the decode response, based on the group of decode responses.
9. A computer program for causing one or more processors to function as:
   means for, regarding a decode request including at least identification data of a decode division and identification data of a buffer in which decode-target data is stored, acquiring a group of the decode requests at a time of a decode start instruction regardless of the identification data of the decode division;
   means for, for each of the acquired decode requests, acquiring decode-target data from an input buffer of a buffer indicated by the identification data of the buffer included in the decode request, and performing decoding of each of the acquired decode-target data respectively;
   means for, for each decoding, storing decoded data obtained by the decoding in an output buffer of a buffer indicated by the identification data of the buffer included in the decode request;
   means for, for each decoding, generating a decode response including at least the identification data of the decode division included in the decode request and the identification data of the buffer included in the decode request, and storing the decode response as a group of decode responses;
   means for determining that decoding for all of the acquired decode requests has been completed; and
   means for issuing a completion notification of decoding when the completion is determined.
10. A computer-implemented method, comprising:
   regarding a decode request including at least identification data of a decode division and identification data of a buffer in which decode-target data is stored, acquiring a group of the decode requests at a time of a decode start instruction regardless of the identification data of the decode division;
   for each of the acquired decode requests, acquiring decode-target data from an input buffer of a buffer indicated by the identification data of the buffer included in the decode request, and performing decoding of each of the acquired decode-target data respectively;
   for each decoding, storing decoded data obtained by the decoding in an output buffer of a buffer indicated by the identification data of the buffer included in the decode request;
   for each decoding, generating a decode response including at least the identification data of the decode division included in the decode request and the identification data of the buffer included in the decode request;
   determining that decoding for all of the acquired decode requests has been completed; and
   issuing a completion notification of decoding when the completion of decoding is determined.

Furthermore, the present disclosure may adopt, for example, the following configurations.

11. An information processing apparatus comprising:
means for issuing an instruction to decode unit data among encoded data composed of a series of unit data;
means for searching for an empty buffer among buffers for storing the unit data;
means for, each time the instruction is issued, storing the unit data in an input buffer of the empty buffer found by the search, and generating a decode request including at least identification data of the buffer in which the unit data is stored, and storing the decode request as a group of decode requests;
means for issuing a start instruction for decoding;
means for acquiring the group of decode requests at the time of the start instruction;
means for acquiring the unit data from an input buffer of a buffer indicated by the identification data of the buffer included in each of the acquired decode requests, and performing decoding of each of the acquired unit data respectively;
means for, for each decoding, storing decoded data obtained by the decoding in an output buffer of a buffer indicated by the identification data of the buffer included in the decode request;
means for, for each decoding, generating a decode response including at least the identification data of the buffer included in the decode request, and storing the decode response as a group of decode responses;
means for determining that decoding for all of the acquired decode requests has been completed;
means for issuing a completion notification of decoding when the completion is determined;
means for performing completion waiting of decoding after the start instruction;
means for releasing the completion waiting when the completion notification has been issued;
means for, after the completion waiting is released, issuing an instruction to acquire decoded data; and
means for, in response to the instruction to acquire the decoded data, acquiring the decoded data from an output buffer of a buffer indicated by the identification data of the buffer included in the decode response, based on the group of decode responses.

12. The information processing apparatus according to 11 above, wherein
the acquisition of the decoded data is configured such that, each time the instruction to acquire the decoded data is issued, one decode response is acquired among the group of decode responses, and the decoded data is acquired from an output buffer of a buffer indicated by the identification data of the buffer included in the acquired decode response.

13. The information processing apparatus according to 12 above, wherein
the storing of the group of decode responses is configured such that, when viewed limited to at least a specific group of the decode requests, the decode responses are stored arranged in the order of the decode requests, and the acquisition of the decode response is configured to acquire a first decode response among the group of decode responses.

14. The information processing apparatus according to any one of 11 to 13 above, wherein:
the instruction to decode is configured to be accompanied by specification of a decode division,
the generation of the decode request is configured to include identification data of the specified decode division in the decode request,
the acquisition of the group of decode requests is configured to acquire the decode requests regardless of the identification data of the decode division included in the decode request,
the generation of the decode response is configured to include the identification data of the decode division included in the decode request in the decode response, and
the acquisition of the decoded data is configured to be performed by specifying a decode division and based on the decode response including the identification data of the specified decode division.

15. The information processing apparatus according to 14 above, further comprising
means for storing past decoding information for each decode division,
wherein the decoding is configured to perform the decoding for each of the acquired decode requests using the past decoding information for the decode division indicated by the identification data of the decode division included in the decode request.

16. The information processing apparatus according to 15 above, wherein:
the instruction to decode is configured to be accompanied by an instruction to initialize the past decoding information,
the generation of the decode request is configured to include instruction data for the initialization in the decode request based on the instruction for the initialization, and
the information processing apparatus further comprises means for initializing the past decoding information for the decode division indicated by the identification data of the decode division included in the acquired decode request, before or after performing decoding of the decode-target data for the acquired decode request, based on the instruction data included in the acquired decode request.

17. The information processing apparatus according to 16 above, wherein
the initialization of the past decoding information is configured to be performed before performing decoding of the decode-target data for the acquired decode request.

18. The information processing apparatus according to any one of 14 to 17 above, further comprising
means for sorting the acquired decode requests for each decode division based on the identification data of the decode division included in the acquired decode requests,
wherein the decoding is configured to be performed based on each of the decode requests after the sorting.

19. The information processing apparatus according to any one of 11 to 18 above, wherein:
the completion waiting is configured to be executed by code separate from the start instruction, and
the issuance of the completion notification and the release of the completion waiting are configured to be performed in a manner in which the release is possible by the issuance, regardless of whether a start timing of the processing by the code for the completion waiting is before or after the issuance.

20. The information processing apparatus according to any one of 11 to 19 above, further comprising
means for including, in the decode request that was stored last before the start instruction among the decode requests, data identifying that the decode request was stored last,
wherein the determination of the completion of the decoding is configured to determine that decoding for all of the acquired decode requests has been completed by referring to at least the data identifying that the decode request was stored last, when the decoding for the decode request that was stored last has ended.

21. The information processing apparatus according to any one of 11 to 19 above, wherein:
the generation of the decode response is configured to further include size data indicating the size of the decoded data in the decode response, and
the acquisition of the decoded data is configured to acquire decoded data based on the size data included in the decode response.

22. An information processing apparatus comprising:
means for generating a decode request including at least identification data of a buffer in which unit data among encoded data composed of a series of unit data is stored, and storing the decode request as a group of decode requests;
means for issuing a start instruction for decoding;
means for acquiring the group of decode requests at the time of the start instruction;
means for acquiring the unit data from an input buffer of a buffer indicated by the identification data of the buffer included in each of the acquired decode requests, and performing decoding of each of the acquired unit data respectively;
means for, for each decoding, storing decoded data obtained by the decoding in an output buffer of a buffer indicated by the identification data of the buffer included in the decode request;
means for, for each decoding, generating a decode response including at least the identification data of the buffer included in the decode request, and storing the decode response as a group of decode responses;
means for determining that decoding for all of the acquired decode requests has been completed;
means for issuing a completion notification of decoding when the completion is determined; and
means for, after the completion notification has been issued, acquiring each of the decoded data from an output buffer of a buffer indicated by the identification data of the buffer included in the decode response, based on the group of decode responses.

23. A computer program for causing one or more processors to function as:
means for, regarding a decode request including at least identification data of a buffer in which unit data among encoded data composed of a series of unit data is stored, acquiring a group of the decode requests at a time of a start instruction for decoding;
means for acquiring the unit data from an input buffer of a buffer indicated by the identification data of the buffer included in each of the acquired decode requests, and performing decoding of each of the acquired unit data respectively;
means for, for each decoding, storing decoded data obtained by the decoding in an output buffer of a buffer indicated by the identification data of the buffer included in the decode request;
means for, for each decoding, generating a decode response including at least the identification data of the buffer included in the decode request, and storing the decode response as a group of decode responses;
means for determining that decoding for all of the acquired decode requests has been completed; and
means for issuing a completion notification of decoding when the completion is determined.

24. The computer program according to 23 above, wherein
the storing of the group of decode responses is configured such that, when viewed limited to at least a specific group of the decode requests, the decode responses are stored arranged in the order of the decode requests.

25. The computer program according to 23 or 24 above, wherein:
the acquisition of the group of decode requests is configured to acquire the decode requests regardless of the identification data of the decode division included in the decode request, and
the generation of the decode response is configured to include the identification data of the decode division included in the decode request in the decode response.

26. The computer program according to 25 above, further causing the one or more processors to function as:
means for storing past decoding information for each decode division,
wherein the decoding is configured to perform the decoding for each of the acquired decode requests using the past decoding information for the decode division indicated by the identification data of the decode division included in the decode request.

27. The computer program according to 26 above, further causing the one or more processors to function as:
means for initializing the past decoding information for the decode division indicated by the identification data of the decode division included in the acquired decode request, before or after performing decoding of the decode-target data for the acquired decode request, based on instruction data for initialization of the past decoding information included in the acquired decode request.

28. The computer program according to 27 above, wherein
the initialization of the past decoding information is configured to be performed before performing decoding of the decode-target data for the acquired decode request.

29. The computer program according to any one of 25 to 28 above, further causing the one or more processors to function as:
means for sorting the acquired decode requests for each decode division based on the identification data of the decode division included in the acquired decode requests,
wherein the decoding is configured to be performed based on each of the decode requests after the sorting.

30. The computer program according to any one of 23 to 29 above,
wherein the issuance of the completion notification is configured to be performed in a manner in which a release of completion waiting is possible by the issuance, regardless of whether a start timing of the processing by the code for the completion waiting is before or after the issuance.

31. The computer program according to 23 or 24 above,
wherein the determination of the completion of the decoding is configured to determine that decoding for all of the acquired decode requests has been completed by referring to at least data identifying that the decode request was stored last before the start instruction, when the decoding for the decode request that was stored last has ended.

32. The computer program according to any one of 23 to 31 above,
wherein the generation of the decode response is configured to further include size data indicating the size of the decoded data in the decode response.

33. A computer-implemented method, comprising:
issuing an instruction to decode unit data among encoded data composed of a series of unit data;
searching for an empty buffer among buffers for storing the unit data;
each time the instruction is issued, storing the unit data in an input buffer of the empty buffer found by the search, and generating a decode request including at least identification data of the buffer in which the unit data is stored, and storing the decode request as a group of decode requests;
issuing a start instruction for decoding;
acquiring the group of decode requests at the time of the start instruction;
acquiring the unit data from an input buffer of a buffer indicated by the identification data of the buffer included in each of the acquired decode requests, and performing decoding of each of the acquired unit data respectively;
for each decoding, storing decoded data obtained by the decoding in an output buffer of a buffer indicated by the identification data of the buffer included in the decode request;
for each decoding, generating a decode response including at least the identification data of the buffer included in the decode request, and storing the decode response as a group of decode responses;
determining that decoding for all of the acquired decode requests has been completed;
issuing a completion notification of decoding when the completion is determined;
performing completion waiting of decoding after the start instruction;
releasing the completion waiting when the completion notification has been issued;
after the completion waiting is released, issuing an instruction to acquire decoded data; and
in response to the instruction to acquire the decoded data, acquiring the decoded data from an output buffer of a buffer indicated by the identification data of the buffer included in the decode response, based on the group of decode responses.

34. A computer-implemented method, comprising:
regarding a decode request including identification data of a buffer in which unit data among encoded data composed of a series of unit data is stored, acquiring a group of the decode requests at a time of a start instruction for decoding;
acquiring the unit data from an input buffer of a buffer indicated by the identification data of the buffer included in each of the acquired decode requests, and performing decoding of each of the acquired unit data respectively;
for each decoding, storing decoded data obtained by the decoding in an output buffer of a buffer indicated by the identification data of the buffer included in the decode request;
for each decoding, generating a decode response including at least the identification data of the buffer included in the decode request, and storing the decode response as a group of decode responses;
determining that decoding for all of the acquired decode requests has been completed; and
issuing a completion notification of decoding when the completion is determined.

While the present disclosure has been described in detail above, the foregoing description is merely illustrative of the present disclosure in all aspects and is not intended to limit the scope thereof. It goes without saying that various improvements and modifications can be made without departing from the scope of the present disclosure. Also, it is understood that those skilled in the art can implement equivalent scope from the description of specific embodiments of the present disclosure, based on the description of the present disclosure and technical common sense. As used herein, elements described in the singular preceded by "a" or "an" should be understood as not excluding a plurality of such elements. Also, it should be understood that terms used in this specification are used with their meanings commonly used in the relevant art, unless otherwise specifically stated. Therefore, unless otherwise defined, all technical and scientific terms used in this specification have the same meaning as commonly understood by those skilled in the art to which the present disclosure pertains. In case of conflict, this specification (including definitions) will prevail.

## Claims

1. An information processing apparatus comprising:
means for specifying a decode division and issuing an instruction to decode decode-target data (10, S1-1, S1-2);
means for, in response to the instruction, storing the decode-target data in an input buffer of a specific buffer and generating a decode request including at least identification data of the specified decode division and identification data of the buffer in which the decode-target data is stored;
means for storing the decode request as a group of decode requests (10, S1-3, S1-4, S1-5);
means for issuing a start instruction for decoding (10, S1-6);
means for acquiring the group of decode requests at the time of the start instruction regardless of the identification data of the decode division (10, S2-1);
means for, for each of the acquired decode requests, acquiring decode-target data from an input buffer of a buffer indicated by the identification data of the buffer included in the decode request;
means for performing decoding of each of the acquired decode-target data respectively (10, S2-2, S2-3);
means for, for each decoding, storing decoded data obtained by the decoding in an output buffer of a buffer indicated by the identification data of the buffer included in the decode request (10, S2-4);
means for, for each decoding, generating a decode response including at least the identification data of the decode division included in the decode request and the identification data of the buffer included in the decode request;
means for storing the decode response as a group of decode responses (10, S2-5);
means for determining that decoding for all of the acquired decode requests has been completed (10, S2-6);
means for issuing a completion notification of decoding when the completion is determined (10, S2-7);
means for waiting for completion of decoding after the start instruction (10, S1-7);
means for releasing the waiting when the completion notification has been issued (10, S1-7);
means for, after the waiting is released, specifying a decode division and issuing an instruction to acquire decoded data (10, S1-8, S1-9, S1-10); and
means for, in response to the instruction to acquire the decoded data, acquiring the decoded data from an output buffer of a buffer indicated by the identification data of the buffer included in the decode response, based on a decode response including the identification data of the specified decode division among the group of decode responses (10, S1-10).

2. The information processing apparatus according to claim 1, further comprising:
means for including, in the decode request that was stored last before the start instruction among the decode requests, data identifying that the decode request was stored last (10, S2-6),
wherein the determination of the completion is configured to determine that decoding has been completed by referring to at least the data identifying that the decode request was stored last, when the decoding for the decode request that was stored last has ended.

3. The information processing apparatus according to claim 1 or 2, wherein:
the waiting is configured to be executed by code separate from the start instruction, and
the issuance of the completion notification and the release of the waiting are configured to be performed in a manner in which the release is performed by the issuance, regardless of whether a start timing of the processing by the code for the waiting is before or after the issuance.

4. The information processing apparatus according to claim 1, wherein:
the decode-target data is data in a specific unit in encoded data composed of a series of data in the specific unit,
the decode request corresponds to the data in the specific unit,
the information processing apparatus further comprises means for storing past decoding information for each decode division (12), and
the decoding is configured to perform the decoding for each acquired decode request using the past decoding information for the decode division indicated by the identification data of the decode division included in the decode request.

5. The information processing apparatus according to claim 4, wherein:
the instruction to decode the decode-target data is configured to be accompanied by an instruction to initialize the past decoding information,
the generation of the decode request is configured to include instruction data for the initialization in the decode request based on the instruction for the initialization, and
the information processing apparatus further comprises means for initializing the past decoding information for the decode division indicated by the identification data of the decode division included in the acquired decode request, before or after performing the decoding of the decode-target data for the acquired decode request, based on the instruction data included in the acquired decode request (10, S2-3).

6. The information processing apparatus according to claim 1, wherein:
the generation of the decode response is configured to further include size data indicating the size of the decoded data in the decode response, and
the acquisition of the decoded data is configured to acquire decoded data based on the size data included in the decode response.

7. The information processing apparatus according to claim 1, wherein:
the decode-target data is data in a specific unit in encoded data composed of a series of data in the specific unit,
the instruction to decode the decode-target data is performed for each of the data in the specific unit, and
the acquisition of the decoded data is configured to acquire the decoded data for the specific unit.

8. A computer program for causing one or more processors to function as:
means for, regarding a decode request including at least identification data of a decode division and identification data of a buffer in which decode-target data is stored, acquiring a group of the decode requests at a time of a decode start instruction regardless of the identification data of the decode division;
means for, for each of the acquired decode requests, acquiring decode-target data from an input buffer of a buffer indicated by the identification data of the buffer included in the decode request;
means for performing decoding of each of the acquired decode-target data respectively;
means for, for each decoding, storing decoded data obtained by the decoding in an output buffer of a buffer indicated by the identification data of the buffer included in the decode request;
means for, for each decoding, generating a decode response including at least the identification data of the decode division included in the decode request and the identification data of the buffer included in the decode request;
means for determining that decoding for all of the acquired decode requests has been completed; and
means for issuing a completion notification of decoding when the completion of decoding is determined.

9. The computer program according to claim 8, wherein
the determination of the completion of decoding is configured to determine that decoding has been completed by referring to at least data identifying that the decode request was stored last before the decode start instruction and included in the decode request, when the decoding for the decode request that was stored last has ended.

10. The computer program according to claim 8 or 9, further causing the one or more processors to function as:
means for storing past decoding information for each decode division,
wherein the decoding is configured to perform the decoding for each of the acquired decode requests using the past decoding information for the decode division indicated by the identification data of the decode division included in each of the decode requests.

11. The computer program according to claim 10, further causing the one or more processors to function as:
means for initializing the past decoding information for the decode division indicated by the identification data of the decode division included in the acquired decode request, before or after performing decoding of the decode-target data for the acquired decode request, based on instruction data for initializing the past decoding information included in the acquired decode request.

12. The computer program according to claim 11,
wherein the initialization of the past decoding information is configured to perform the initialization before performing decoding of the decode-target data for the acquired decode request.

13. The computer program according to claim 8 or 9, further causing the one or more processors to function as:
means for sorting the acquired decode requests for each decode division based on the identification data of the decode division included in the acquired decode requests,
wherein the decoding is configured to be performed based on each of the decode requests after the sorting.

14. The computer program according to claim 8 or 9,
wherein the generation of the decode response is configured to further include size data indicating the size of the decoded data in the decode response.

15. A computer-implemented method, comprising:
specifying a decode division and issuing an instruction to request decoding of decode-target data;
in response to the instruction, storing the decode-target data in an input buffer of a specific buffer and storing a decode request including at least identification data of the specified decode division and identification data of the buffer in which the decode-target data is stored as a group of decode requests;
issuing a start instruction for decoding;
acquiring the group of decode requests at the time of the start instruction regardless of the identification data of the decode division;
for each of the acquired decode requests, acquiring decode-target data from an input buffer of a buffer indicated by the identification data of the buffer included in the decode request;
performing decoding of each of the acquired decode-target data respectively; for each decoding, storing decoded data obtained by the decoding in an output buffer of a buffer indicated by the identification data of the buffer included in the decode request;
for each decoding, storing a decode response including at least the identification data of the decode division included in the decode request and the identification data of the buffer included in the decode request as a group of decode responses;
determining that decoding for all of the acquired decode requests has been completed;
issuing a completion notification of decoding when the completion is determined;
performing waiting for completion of decoding after the start instruction;
releasing the waiting when the completion notification has been issued;
after the waiting is released, specifying a decode division and issuing an instruction to acquire decoded data; and
in response to the instruction to acquire the decoded data, acquiring the decoded data from an output buffer of a buffer indicated by the identification data of the buffer included in the decode response, based on a decode response including the identification data of the specified decode division among the group of decode responses.
